# EUROPEAN PATENT APPLICATION

(11) **EP 3 838 009 A1**
(43) Date of publication of application: **23.06.2021**
(21) Application number: 19219094.0
(22) Date of filing: 20.12.2019
(51) Int. Cl.: A24F 40/40, H02J 7/00

(54) **CHARGING DEVICE AND SMOKING SUBSTITUTE KIT**

(71) Applicant: NERUDIA LIMITED, Liverpool Merseyside L24 9HP (GB)
(72) Inventor: The designation of the inventor has not yet been filed
(74) Representative: Mewburn Ellis LLP

(57) **Abstract**

Various embodiments provide a charging device for charging a smoking substitute device, the charging device comprising: a housing having a holder for receiving a smoking substitute device; a charging assembly comprising a first connection interface arranged for connection to the smoking substitute device when the smoking substitute device is received in the holder, and a second connection interface arranged for connection to an external device; wherein the charging assembly is configured to charge the smoking substitute device when the smoking substitute device is connected to the first connection interface, and to charge the external device when the external device is connected to the second connection interface.

## Description

### Field of the Invention

The present invention relates to a charging device for a smoking substitute device and a kit including both the charging device and the smoking substitute device.

### Background

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Combustion of organic material such as tobacco is known to produce tar and other potentially harmful byproducts. There have been proposed various smoking substitute devices in order to avoid the smoking of tobacco.

Such smoking substitute devices can form part of nicotine replacement therapies aimed at people who wish to stop smoking and overcome a dependence on nicotine.

Smoking substitute devices include electronic systems that permit a user to simulate the act of smoking by producing an aerosol (also referred to as a "vapour") that is drawn into the lungs through the mouth (inhaled) and then exhaled. The inhaled aerosol typically bears nicotine and/or a flavourant without, or with fewer of, the odour and health risks associated with traditional smoking.

In general, smoking substitute devices are intended to provide a substitute for the rituals of smoking, whilst providing the user with a similar experience and satisfaction to those experienced with traditional smoking and with combustible tobacco products.

The popularity and use of smoking substitute devices has grown rapidly in the past few years. Although originally marketed as an aid to assist habitual smokers wishing to quit tobacco smoking, consumers are increasingly viewing smoking substitute devices as desirable lifestyle accessories. There are a number of different categories of smoking substitute devices, each utilising a different smoking substitute approach.

One approach is the so-called "vaping" approach, in which a vaporisable liquid, typically referred to (and referred to herein) as "e-liquid", is heated by a heating device (referred to herein as an electronic cigarette or "e-cigarette" device) to produce an aerosol vapour which is inhaled by a user. The e-liquid typically includes a base liquid as well as nicotine and/or a flavourant. The resulting vapour therefore also typically contains nicotine and/or a flavourant. The base liquid may include propylene glycol and/or vegetable glycerine.

A typical e-cigarette device includes a mouthpiece, a power source (typically a battery), a tank for containing e-liquid, as well as a heating device. In use, electrical energy is supplied from the power source to the heating device, which heats the e-liquid to produce an aerosol (or "vapour") which is inhaled by a user through the mouthpiece.

E-cigarettes can be configured in a variety of ways. For example, there are "closed system" vaping smoking substitute devices, which typically have a sealed tank and heating element. The tank is pre-filled with e-liquid and is not intended to be refilled by an end user. One subset of closed system vaping smoking substitute devices include a main body which includes the power source, wherein the main body is configured to be physically and electrically coupled to a consumable including the tank and the heating element. In this way, when the tank of a consumable has been emptied, that consumable is disposed of. The main body can be reused by connecting it to a new, replacement, consumable. Another subset of closed system vaping smoking substitute devices are completely disposable, and intended for one-use only.

There are also "open system" vaping smoking substitute devices which typically have a tank that is configured to be refilled by a user. In this way the entire device can be used multiple times.

An example vaping smoking substitute device is the myblu™ e-cigarette. The myblu™ e-cigarette is a closed system which includes a main body and a consumable. The main body and consumable are physically and electrically coupled together by pushing the consumable into the main body. The main body includes a rechargeable battery. The consumable includes a mouthpiece, a sealed tank which contains e-liquid, as well as a heater, which for this device is a heating filament coiled around a portion of a wick. The wick is partially immersed in the e-liquid, and conveys e-liquid from the tank to the heating filament. The device is activated when a microprocessor on board the main body detects a user inhaling through the mouthpiece. When the device is activated, electrical energy is supplied from the power source to the heating device, which heats e-liquid from the tank to produce a vapour which is inhaled by a user through the mouthpiece.

Where a smoking substitute device includes a rechargeable power source, such systems can be used in combination with a charging cable or charging device. The charging cable or charging device are connectable to the smoking substitute device to facilitate recharging of the rechargeable power source.

There is a continuing need to improve the manner in which smoking substitute devices with rechargeable power sources are charged, and the devices used for such charging.

The present invention has been devised in light of the above considerations.

### Summary of the Invention

At its most general, the present invention relates to a charging device for charging a smoking substitute device. The charging device comprises a housing having a holder for receiving a smoking substitute device, and a charging assembly comprising a first connection interface for connection to the smoking substitute device when the smoking substitute device is received in the holder. The charging assembly further comprises a second connection interface arranged for connection to an external device. In this manner, the charging device may serve to charge both the smoking substitute device, and an external device. Thus, advantageously, a user may need to only carry with them a single charging device for both the smoking substitute device and the external device, rather than carrying separate chargers for each device.

Typically, a charging device for a smoking substitute device may only be compatible with a specific type (e.g. brand) of smoking substitute device, such that conventional charging devices cannot usually be used to charge other devices. The second connection assembly in the charging device of the invention may enable a wide variety of devices in addition to the smoking substitute device to be charged by the charging device, thus improving functionality and usability of the charging device.

It is to be understood that the smoking substitute device may or may not include a consumable. That is, the smoking substitute device may include a main body with or without a consumable.

According to a first aspect of the present invention, there is provided charging device for charging a smoking substitute device, the charging device comprising: a housing having a holder for receiving a smoking substitute device; a charging assembly comprising a first connection interface arranged for connection to the smoking substitute device when the smoking substitute device is received in the holder, and a second connection interface arranged for connection to an external device; wherein the charging assembly is configured to charge the smoking substitute device when the smoking substitute device is connected to the first connection interface, and to charge the external device when the external device is connected to the second connection interface.

The holder may be formed as a cavity or recess in the housing. The holder may have a shape that is complementary to a shape of the smoking substitute device (or at least a shape of its main body). A shape of the cavity may for example substantially match a cross-sectional shape of the main body of the smoking substitute device. For example, the cavity may be arranged to form an interference fit with the main body. This may ensure that the main body is securely held in the cavity. This may also ensure that only devices that are intended for use with the charging device may be inserted into the cavity, to prevent misuse of the charging device. This may also serve to avoid a user putting their finger into the cavity, where it may come into contact with (and damage) the first connection interface.

In an embodiment, the cavity (holder) may be integrally formed as part of the housing, which may facilitate construction of the housing. For example, the housing may be formed as a single piece of moulded or 3D-printed plastic.

The first connection interface may be in the form on an electrical connector that is disposed in the holder and arranged for connection to a main body of the smoking substitute device when the main body is received in the holder. In this manner, when the main body of the smoking substitute device is received in the holder, it may be connected to the charging assembly via the first connection interface, so that a battery (also referred to herein as "second battery") in the main body may be recharged by the charging/control circuitry and a rechargeable battery in the charging device.

In an embodiment, the first connection interface may be positioned in a base of the holder (e.g. cavity) in the housing. In this manner, the smoking substitute device may be connected to the first connection interface by inserting the smoking substitute device into the holder.

The first connection interface may be arranged to connect to a corresponding connector on the main body of the smoking substitute device, to form an electrical connection (and, possibly, mechanical connection) between the charging assembly and the main body. For example, the first connection interface may include a plug that is arranged to engage a corresponding socket on the main body (or vice versa) when the main body is received in the holder. Alternatively, the first connection interface may include one or more (e.g. two) pins that are arranged to contact one or more (e.g. two) contact pads on the main body (or visa versa). The first connection interface may be disposed in the holder. In this manner, when the main body is inserted into the holder, the first connection interface may engage the connector on the main body to form an electrical connection. Providing the connection interface in the holder may further serve to protect the connection interface, and avoid its coming into contact with a user.

The first connection interface may include a universal serial bus (USB) interface (e.g. USB-C). In this manner, a main body having a USB connector may be charged by the charging device. A USB-C interface does not have different "up" and "down" orientations (i.e. it is a symmetrical connector), which may facilitate connecting the main body to the connection interface, as a user may connect the main body to the USB-C interface in either of the two possible orientations. In some other embodiments, however, an asymmetrical connector may be used instead, for example, a micro-USB connector. In this case, an outer surface of the housing may include a visual indicator signifying an orientation of the smoking substitute device necessary for the asymmetric electrical connector to engage with the smoking substitute device when the smoking substitute device is received in the holder. Conveniently, the visual indicator is a marking signifying a required location of a front or a back of the smoking substitute device as the smoking substitute device is inserted into the holder. In another embodiment, the first connection interface may include two connection pins (e.g. pogo pins) which are arranged to contact two cooperating contact pads on the main body when the main body is inserted into the holder. This type of two pin connector may be symmetric (i.e. either pin may contact either pad) or asymmetric (i.e. one pin must contact a specific one of pads, and the other pin must contact the other one of the pads).

The second connection interface is configured to form an electrical connection with the external device, so that the charging device may charge the external device. The external device may be any electronic device that is connectable to the second connection interface. The external device may include a rechargeable battery which is arranged to power the external device. When the external device is connected to the second connection interface, the rechargeable battery in the external device may be recharged. The rechargeable battery in the external device may be referred to herein as a "third battery".

In some examples, the external device may be a further smoking substitute device (i.e. in addition to the smoking substitute device that is receivable in the holder). In this manner, the charging device may serve to charge two separate smoking substitute devices. As another example, the external device may be a mobile phone or other portable electronic device.

The second connection interface may be disposed outside the holder. In this manner, the second connection interface may be accessible even when the smoking substitute device is received in the holder. Thus, both the smoking substitute device and the external device may be simultaneously connected to the charging device.

The charging device may comprise a rechargeable battery disposed within the housing, and the charging assembly may be configured to charge the smoking substitute device and the external device with the rechargeable battery. The rechargeable battery of the charging device may also be referred to herein as the "first battery". The rechargeable battery in the charger may be any suitable type of known rechargeable battery, such as a lithium-ion or a lithium-polymer rechargeable battery. As an example, the rechargeable battery may have a capacity of at least 150 mAh. This may correspond to approximately 50% of a battery capacity of the smoking substitute device. In preferred embodiments, the rechargeable battery may have a larger capacity, e.g. 200 mAh, 250 mAh, 300 mAh, 350 mAh. A larger capacity of the rechargeable battery may enable the charger to provide a greater charge to the smoking substitute device.

The charging device may be connectable to an external power source (e.g. a laptop, or a mains supply) to recharge the rechargeable battery. The charging assembly may be configured to control charging of the rechargeable battery from the external power source when the charging assembly is connected to the external power source. For example, the charging assembly may include a third connection interface which may be used to connect the charging device to the external power source. The third connection interface may include a plug or socket, for connecting a cable. The cable may be a USB cable, and the third connection interface may include a USB connector (e.g. a USB female socket or a USB male plug) which is electrically coupled to the charging assembly. The third connection interface may be positioned in an outer surface of the housing, for example, a base portion of the housing.

The charging assembly may include control circuitry (e.g. in the form of a microcontroller) which is configured to control charging of the smoking substitute device and the external device (e.g. by the rechargeable battery). For example, the control circuitry may be configured to control an amount of power that is supplied to the first connection interface and the second connection interface, in order to charge the smoking substitute device and the external device. The control circuitry may also be configured to control charging of the rechargeable battery by the external power source. The control circuitry may be disposed within the housing.

The control circuitry may be configured to enable pass-through charging when the charging device is connected to the external power source. Thus, when the charging device is connected to an external power source, the control circuitry may be configured to enable simultaneous charging of the rechargeable battery of the charging device, the smoking substitute device, and the external device (e.g. when the smoking substitute device is connected to the first connection interface and the external device is connected to the second connection interface).

During pass-through charging, the rechargeable battery in the charging device may be charged by power from the external power source, whilst the smoking substitute device and external device may be charged by an output from the rechargeable battery and/or by the external power source. As a result, following charging (i.e. after the charging device is disconnected from the external power source), the rechargeable battery in the charging, the smoking substitute device and the external device may be charged. In particular, following charging, the rechargeable battery in the charger, the smoking substitute device and the external device may be fully charged. This may enable prolonged use of the smoking substitute device and/or external device, without having to connect the smoking substitute device, external device or the charger to an external power source. In contrast, in chargers where pass-through charging is not implemented, the rechargeable battery in the charger may not be simultaneously charged with other devices that are connected to the charger, so that they may not both be fully charged following charging.

The charging circuitry may include a pass-through path that can be connected to pass power or an input voltage from the external power source to the first and second connection interfaces. The charging circuitry may involve one or more power switches (e.g. MOSFETs), to control power paths in the charging device (e.g. paths between the external power source, the rechargeable battery in the charger, and the connection interfaces). Thus, the charging circuitry may control how power is routed between the various components. The charging circuitry may also include over-voltage and over-current protection circuitry, for example, to protect against voltage or current surges. As an example, the charging circuitry may include the MP2690 charging circuit by Monolithic Power Systems (MPS) (see e.g. www.monolithicpower.com/en/mp2690.html), which is configured to enable pass-through charging.

The charging circuitry may be configured to control whether power from the rechargeable battery in the charging device and/or power from the external power source is used to charge the smoking substitute device and the external device, e.g. based on a charge state of the rechargeable battery and the smoking substitute device. This may be achieved, for example, by controlling the states of the power switches on the power paths between the various components. In this manner, efficiency of charging of the rechargeable battery the smoking substitute device and the external device may be improved. For example, if the charging circuitry detects that the rechargeable battery is fully charged, the charging circuitry may be configured to deliver power only to the connection interfaces (e.g. via the pass-through path).

The charging circuitry may include electrical components that are arranged to provide an output of the rechargeable battery to the first and second connection interfaces, so that the smoking substitute device and external device may be charged by the rechargeable battery when they are connected to their respective connection interface. The charging circuitry may be configured to convert an output of the rechargeable battery to an output that is suitable for charging the smoking substitute device and/or external device. Such charging circuitry may make use of conventional electrical components, which are generally known in the field of chargers.

The charging device may further include a charge indicator for indicating a charging status of a main body received in the holder. In this manner, a user may be informed of the charging status of the main body.

Herein, a charging status may be an indication that a main body received in the holder is being charged, or that it is fully charged. For example, the charge indicator may be an indicator light which is arranged to indicate the charging status. The indicator light may indicate via a blinking pattern of the indicator light (e.g. blinking means charging, no blinking means charged), or via a colour of the indicator light (e.g. red means charging, blue means charged). Other types of charge indicator are also contemplated, such as a display or the like. Additionally, the charging indicator, or a second charging indicator, may be configured to indicate a charging status of the charging device when it is connected to the external power supply.

The second connection interface may be disposed on a side of the housing. In this manner, the second connection interface may be easily accessible, to facilitate connection of the external device to the second connection interface. For example, the second connection interface may be disposed on an outside of the housing. In contrast, where the first connection interface is disposed within the holder, the first connection interface may be considered as being inside the housing. Herein, a side of the housing may refer to an external surface of the housing.

The second connection interface may include a cable and a connector disposed at an end of the cable. This may facilitate connecting the external device to the connector, as the cable may enable the connector to be moved relative to the housing. The connector of the second connection interface may be configured for connection to a corresponding connector on the external device. The connector may be an electrical connector. For example, the connector may include a plug that is arranged to engage a corresponding socket on the external device (or vice versa). The cable may be any suitable electrical cable for delivering power to the external device when the external device is connected to the connector. In particular, the cable may be flexible (e.g. bendable or supple). The cable may be electrically connected to charging circuitry disposed within the housing, e.g. so that power from the rechargeable battery of the charging device and/or from the external power source may be delivered to the connector. The cable may then protrude through an aperture in the housing, so that the connector may be disposed outside the housing.

The side of the housing may include a recess for receiving the connector. In this manner, the connector may be stowed within the recess when not in use. This may facilitate transport of the charging device, and avoid damage to the connector when it is not in use. The recess may be formed in an external surface of the housing. For example, the recess may be formed as an elongate groove in the external surface of the housing. The recess may be integrally formed as part of the housing, e.g. as part of a moulding or 3D printing process for making the housing.

A shape of the recess may be complementary to a shape of the connector. This may facilitate storing the connector in the recess. This may also facilitate retaining the connector in the recess. For example, the recess may be arranged to form an interference fit with the connector when the connector is received in the recess.

The housing may include a cover portion arranged to cover the connector when the connector is received in the recess. The cover portion may thus serve to protect (and hide) the connector when it is received in the recess. So, for example, the connector may be protected from damage when the charging device is dropped. The cover portion may also serve to retain the connector in the recess when the connector is received in the recess. Together, the recess and cover portion may form a pocket or cavity in which the connector is receivable. The cover portion may be formed as part of the housing, e.g. such that the pocket or cavity is defined in the housing.

The recess may be further arranged to receive the cable. In this manner, when the second connection interface is not in use, the cable and connector may be stowed in the recess. Storing the cable in the recess may avoid the cable from becoming tangled or damaged, which may facilitate transport of the charging device. A portion of the recess that is arranged to receive the cable may have a shape that is complementary to the cable. The recess may be arranged such that, when the cable is received in the recess, a surface of the cable may lie flush with an external surface of the housing. This may serve to avoid damage to the cable, as well as improve an appearance of the charging device.

A depth of the recess may correspond to a thickness of the cable and/or the connector. In this manner, when the cable and/or connector are received in the recess, a surface of the cable and/or connector may lie flush with an external surface of the housing.

The second connection interface may be movable between a stowed position where the connector is received in the recess, and a deployed position where the connector is disposed outside of the recess. In this manner, a user may place the second connection interface in the stowed position when the second connection interface is not in use, e.g. by placing the connector in the recess. Then, when the user wishes to use the second connection interface to charge the external device, the second connection interface may be moved to the deployed position, i.e. the user may remove the connector from the recess so that it may be connected to the external device. The cable may be sufficiently flexible to enable the connection interface to be moved between the stowed and deployed positions.

Where the recess is arranged to receive the cable, the cable may be disposed in the recess when the second connection interface is in the stowed position, and at least a part of the cable may be disposed outside the recess when the second connection interface is in the deployed position.

When the second connection interface is in the stowed position, a surface of the connector and/or a surface of the cable may lie flush with an external surface of the housing. In this manner, when the second connection interface is in the stowed position, the charging device may have a substantially smooth outer surface.

The second connection interface may be biased towards the stowed position. In this manner, the second connection interface may automatically move towards the stowed position when no longer in use. For example, the second connection interface may include a biasing element which is arranged to return the connector to the recess.

The cable may include a resilient material arranged to bias the second connection interface towards the stowed position. In other words, the biasing element mentioned above may include the resilient material in the cable. Thus, the resilient material in the cable may urge the cable and connector towards the stowed position. For example, the cable may include an outer jacket made of rubber, silicone, or some other resilient material. In this way, when the connector is moved out of the recess, the resilient material in the cable may exert a force which urges the connector back towards the recess.

A gripping element may be disposed on a surface of the cable. The gripping element may facilitate gripping the cable, in order to move the second connection interface from the stowed position to the deployed position. This may be particularly beneficial where the second connection interface is biased towards the stowed position, as the gripping element may facilitate applying a force to the cable that overcomes a biasing force that urges the second connection interface towards the stowed position. For example, the gripping element may include one or more protrusions or protuberances formed on an outer surface of the cable. As another example, the gripping element may include a textured surface or non-slip material disposed on the outer surface of the cable.

The cable may include opposing flat surfaces. In other words, a cross-section of the cable may have opposing flat sides. In this manner, the cable may have a non-circular cross-section. This may enable the cable to lie flat against the housing of the charging device, which may facilitate stowing of the second connection interface. Where the housing includes a recess arranged to receive the cable, providing the cable with opposing flat surfaces may enable the cable to lie flat within the recess, such that a flat surface of the cable may lie flush with an external surface of the housing.

In some cases, a cross-sectional shape of the cable may substantially match a cross-sectional shape of the connector. In this manner, both the cable and connector may have a similar profile. This may avoid an abrupt change in cross-section at an interface between the cable in the connector, which may avoid the cable or connector catching on other objects. Additionally, where the housing includes a recess arranged to receive the connector and the cable, this may enable a shape of the recess to be substantially uniform along its length. For example, the recess may have a uniform width and thickness along its length. This may also facilitate sliding the cable and connector along the recess, e.g. to remove the connector from the recess and move the second connection interface to the deployed position.

The connector may be a USB connector. For example, the connector may be a USB-C connector. In this manner, an external device having a USB connector may be charged by the charging device.

In some embodiments, when the smoking substitute device is connected to the first connection interface and the external device is connected to the second connection interface, the charging assembly may configured to simultaneously charge the smoking substitute device and the external device. In this manner, both the smoking substitute device and the external device may be simultaneously charged by the charging device. As discussed above, control of charging of the smoking substitute device and the external device may performed by control circuitry in the charging assembly.

Alternatively, the charging assembly may be configured to prioritise charging of the smoking substitute device or the external device. For example, the control circuitry may be configured to first charge the smoking substitute device and then, once the smoking substitute device is fully charged, charge the external device (or vice versa). As another example, the control circuitry may be configured to charge the smoking substitute device or the external device based on a charge state of the smoking substitute device and a charge state of the external device. In such an example, the control circuitry may be configured to prioritise charging of the device having the lowest charge state.

In some embodiments, the charging device may be in the form of a portable charging case.

The charging device may include a cover that is moveably attached to the housing and movable between a closed configuration, in which the cover covers an opening of the holder to form an enclosure around the smoking substitute device when the smoking substitute device is received in the holder, and an open configuration, in which the cover is spaced from the opening to permit insertion (or removal) of the smoking substitute device into (or out of) the holder. The cover may be movably attached (e.g. hinged) to the housing such that the cover is movable (e.g. rotatable) relative to the housing about an axis of rotation.

The charging device of the first aspect of the invention may be included in a smoking substitute kit. Thus, according to a second aspect of the present invention, there is provided a smoking substitute kit comprising: a charging device according to the first aspect of the invention; and a smoking substitute device. Any features described above in relation to the first aspect of the invention may be included in the second aspect of the invention.

Optionally, the smoking substitute device is longer than the holder such that, when the smoking substitute device is inserted into the holder, a portion of the smoking substitute device protrudes from the charging device, and wherein the smoking substitute device is operable for vapour generation when the smoking substitute device is inserted into the holder. It is to be understood that the smoking substitute device includes a main body with or without a consumable. Therefore, a depth of the holder may be slightly less than a length of the main body (e.g. by 3mm or so), such that an end of the main body protrudes from the holder and, when a consumable is attached to the main body, an end of the consumable protrudes from the holder. In this way, the consumable and the main body may be separately manually removed from the holder.

The charging device may be a charge case in which the holder is a cavity which is sized so as to receive a majority or an entirety of the main body of the smoking substitute device. For example, the cavity may have a depth between 80mm and 100mm, and preferably between 85mm and 95mm, and more preferably between 87mm and 93mm, and still more preferably between 89mm and 91mm. Conveniently, the cavity may have a depth of about 90mm.

It is to be understood that the smoking substitute device may be used (e.g. to generate vapour for inhalation) whilst it is connected to and being charged by the charging device. In this scenario, the smoking substitute device may include a main body and a consumable.

Herein, a smoking substitute device may refer to an e-cigarette or vaping device.

The smoking substitute device may include a main body and a consumable, the consumable being engageable with the main body. The main body may have an engagement end which is engageable with the consumable, the engagement end being on an opposite end of the main body relative to an end portion which includes a connector that is arranged to engage the connection interface of the charging device when the main body is received in a holder of the charging device.

The holder of the charging device may have a shape that is complementary to a shape of the main body, e.g. so that an interference fit may be formed between the holder and the main body when the main body is received in the holder.

The consumable is configured for engagement with the main body (e.g. so as to form a closed smoking substitute device). The consumable may also be referred to as a "cartridge" or "pod" for the smoking substitute device. For example, the consumable may comprise components of the system that are disposable, and the main body may comprise non-disposable or non-consumable components (e.g. power supply, controller, sensor, etc.) that facilitate the delivery of aerosol by the consumable. In such an embodiment, an aerosol former (e.g. e-liquid) may be replenished by replacing a used consumable with an unused consumable.

Alternatively, the consumable may be reusable. In such embodiments an aerosol former (e.g. e-liquid) of the consumable may be replenished by re-filling e.g. a reservoir of the consumable with the aerosol former (rather than replacing a consumable component of the apparatus).

In light of this, it should be appreciated that some of the features described herein as being part of the consumable may alternatively form part of a main body.

The main body and the consumable may be configured to be physically coupled together. For example, the consumable may be at least partially received in a recess of the main body, such that there is an interference fit between the main body and the consumable. Alternatively, the main body and the consumable may be physically coupled together by screwing one onto the other, or through a bayonet fitting.

Thus, the consumable and main body may comprise one or more engagement portions for engagement with one another. In this way, one end of the consumable may be coupled with the main body, whilst an opposing end of the consumable may define a mouthpiece of the smoking substitute device.

The smoking consumable may comprise a reservoir configured to store an aerosol former, such as an e-liquid. The e-liquid may, for example, comprise a base liquid and e.g. nicotine. The base liquid may include propylene glycol and/or vegetable glycerine. The e-liquid may also contain a flavourant, to provide a flavour to the user.

The reservoir may be in the form of a tank. At least a portion of the tank may be translucent. For example, the tank may comprise a window to allow a user to visually assess the quantity of e-liquid in the tank. A housing of the main body may comprise a corresponding aperture (or slot) or window that may be aligned with a translucent portion (e.g. window) of the tank. The reservoir may be referred to as a "clearomizer" if it includes a window, or a "cartomizer" if it does not.

The consumable may comprise a passage for fluid flow therethrough. The passage may extend through (at least a portion of) the consumable, between openings that may define an inlet and an outlet of the passage. The outlet may be at a mouthpiece of the consumable. In this respect, a user may draw fluid (e.g. air) into and through the passage by inhaling at the outlet (i.e. using the mouthpiece). The passage may be at least partially defined by the tank. The tank may substantially (or fully) define the passage. In this respect, the tank may surround the passage.

The consumable may comprise an aerosol-generator. The aerosol generator may comprise a wick. The aerosol generator may further comprise a heater. The wick may comprise a porous material. A portion of the wick may be exposed to fluid flow in the passage. The wick may also comprise one or more portions in contact with liquid stored in the reservoir. For example, opposing ends of the wick may protrude into the reservoir and a central portion (between the ends) may extend across the passage so as to be exposed to fluid flow in the passage. Thus, fluid may be drawn (e.g. by capillary action) along the wick, from the reservoir to the exposed portion of the wick.

The heater may comprise a heating element, which may be in the form of a filament wound about the wick (e.g. the filament may extend helically about the wick). The filament may be wound about the exposed portion of the wick. The heating element may be electrically connected (or connectable) to a power source (e.g. a battery). Thus, in operation, the power source may supply electricity to (i.e. apply a voltage across) the heating element so as to heat the heating element. This may cause liquid stored in the wick (i.e. drawn from the tank) to be heated so as to form a vapour and become entrained in fluid flowing through the passage. This vapour may subsequently cool to form an aerosol in the passage.

The main body may comprise a second battery (e.g. a rechargeable battery or Li-ion battery). The second battery is arranged to power the smoking substitute device, for example, so that the smoking substitute device can generate vapour for inhalation by a user. The second battery may be electrically connected (or connectable) to a heater of the smoking substitute device (e.g. when engaged with the main body). A connector (e.g. in the form of a USB connector) may be provided on the end portion of the main body for recharging this battery via engagement with the connection interface in the holder of the charging device.

The consumable may comprise an electrical interface for interfacing with a corresponding electrical interface of the main body. One or both of the electrical interfaces may include one or more electrical contacts. Thus, when the main body is engaged with the consumable, the electrical interface may be configured to transfer electrical power from the power source to a heater of the consumable.

The electrical interface may also be used to identify the consumable from a list of known types. For example, the consumable may have a certain concentration of nicotine and the electrical interface may be used to identify this. The electrical interface may additionally or alternatively be used to identify when a consumable is connected to the main body.

The main body may comprise an interface, which may, for example, be in the form of an RFID reader, a barcode or QR code reader. This interface may be able to identify a characteristic (e.g. a type) of a consumable engaged with the main body. In this respect, the consumable may include any one or more of an RFID chip, a barcode or QR code, or memory within which is an identifier and which can be interrogated via the interface.

The main body may comprise a controller, which may include a microprocessor. The controller may be configured to control the supply of power from the power source to the heater of the smoking substitute apparatus (e.g. via the electrical contacts). A memory may be provided and may be operatively connected to the controller. The memory may include non-volatile memory. The memory may include instructions which, when implemented, cause the controller to perform certain tasks or steps of a method.

The main body may comprise a wireless interface, which may be configured to communicate wirelessly with another device, for example a mobile device, e.g. via Bluetooth®. To this end, the wireless interface could include a Bluetooth® antenna. Other wireless communication interfaces, e.g. WiFi®, are also possible. The wireless interface may also be configured to communicate wirelessly with a remote server.

A puff sensor may be provided that is configured to detect a puff (i.e. inhalation from a user). The puff sensor may be operatively connected to the controller so as to be able to provide a signal to the controller that is indicative of a puff state (i.e. puffing or not puffing). The puff sensor may, for example, be in the form of a pressure sensor or an acoustic sensor. That is, the controller may control power supplied to the heater of the consumable in response to a puff detection by the sensor. The control may be in the form of activation of the heater in response to a detected puff. That is, the smoking substitute device may be configured to be activated when a puff is detected by the puff sensor. The puff sensor may form part of the consumable or the main body.

The invention includes the combination of the aspects and preferred features described except where such a combination is clearly impermissible or expressly avoided.

### Summary of the Figures

So that the invention may be understood, and so that further aspects and features thereof may be appreciated, embodiments illustrating the principles of the invention will now be discussed in further detail with reference to the accompanying figures, in which:
Figure 1A is a schematic side view of a smoking substitute device that may be used with a charging device according to an embodiment of the invention, where the smoking substitute device is in an engaged position;
Figure 1B is a schematic side view of the smoking substitute device of Figure 1A, where the smoking substitute device is in a disengaged position;
Figure 1C is a schematic end view of the smoking substitute device of Figure 1A;
Figure 1D is a cross-sectional diagram of a consumable of the smoking substitute device of Figure 1A;
Figure 2A is a schematic view of a charging device, in accordance with an embodiment of the invention, with a cover of the charging device in a closed configuration;
Figure 2B is a schematic view of a smoking substitute kit including a smoking substitute device and the charging device of Figure 2A, in accordance with an embodiment of the invention, with the cover of the charging device in an open configuration;
Figure 3A is a perspective view of a charging device according to an embodiment of the invention, where a second connection interface of the charging device is in a stowed position;
Figure 3B is a perspective view of the charging device of Figure 3A, where the second connection interface of the charging device is in a deployed position;
Figure 3C is a perspective view of the charging device of Figure 3A, illustrating a process for moving the second connection interface from the stowed position to the deployed position; and
Figure 3D is a perspective view of the charging device of Figure 3A, where the second connection interface is in the deployed position, and where a smoking substitute device is connected to the second connection interface.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

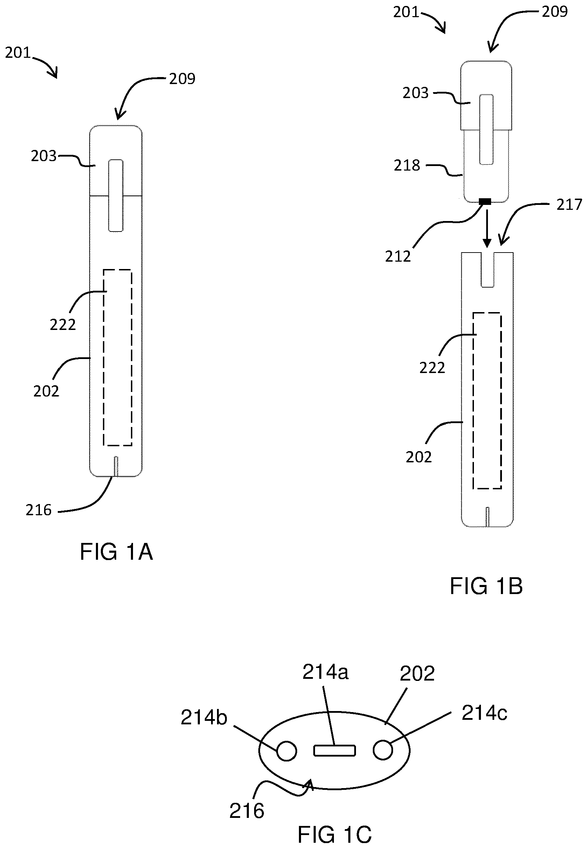

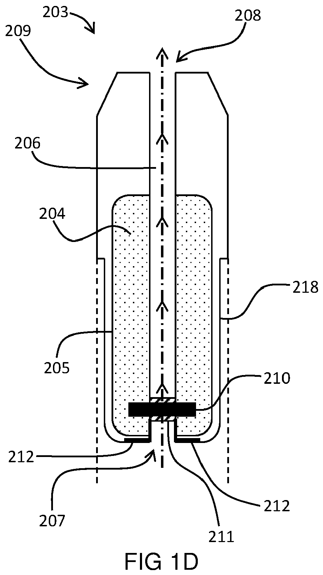

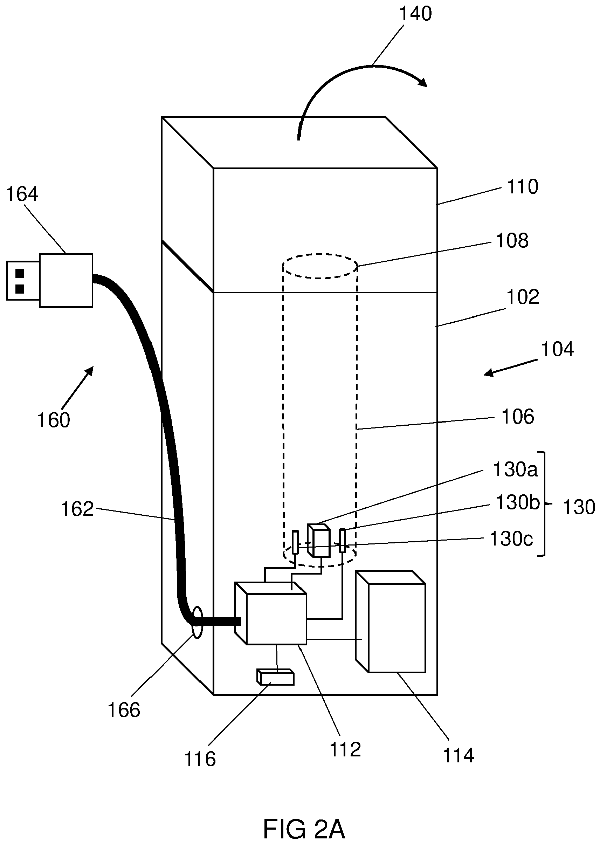

Figures 1A, 1B, 1C and 1D illustrate a smoking substitute device 201. The device 201 may, for example, be used with the charging device 104 of Figures 2A to 2B described below. In an embodiment, the smoking substitute device 201 is an electronic cigarette or a vaping device.

The device 201 comprises a main body 202, and a consumable (or "pod") 203. In the illustrated embodiment the consumable 203 is removable from the main body 202, so as to be a replaceable component of the device 201. In other words, the device 201 is a closed system. A cross-sectional view of the consumable 203 is shown in Figure 1D.

As is apparent from Figures 1A and 1B, the consumable 203 is configured to engage the main body 202. The main body 202 includes an engagement portion 217, which is in the form of a cavity disposed at a first end of the main body 202. The engagement portion 217 of the main body 202 is arranged to engage an engagement portion 218 on the consumable 203. Figure 1A shows the main body 202 and the consumable 203 in an engaged state, whilst Figure 1B shows the main body 202 and the consumable 203 in a disengaged state. When engaged, the engagement portion 218 of the consumable 203 is received in the cavity of the engagement portion 217 of the main body 202, and is retained in the engaged position by way of a snap-engagement mechanism. In other embodiments, the main body 202 and consumable 203 may be engaged by screwing one into (or onto) the other, through a bayonet fitting, or by way of an interference fit.

The device 201 is configured to vaporise an aerosol-former, which in the illustrated embodiment, is in the form of a nicotine-based e-liquid 204. The e-liquid 204 comprises nicotine and a base liquid including propylene glycol and/or vegetable glycerine. The e-liquid 204 may also comprise a flavourant, for producing a flavoured aerosol.

As is more apparent from Figure 1D, the e-liquid 204 is stored within a reservoir in the form of a tank 205 that forms part of the consumable 203. In the illustrated embodiment, the consumable 203 is a "single-use" consumable 203. That is, upon exhausting the e-liquid 204 in the tank 205, the intention is that the user disposes of the entire consumable 203. In other embodiments, the e-liquid (i.e. aerosol former) may be the only part of the system that is truly "single-use". That is, the tank may be refillable with e-liquid or the e-liquid may be stored in a non-consumable component of the system. For example, the e-liquid may be stored in a tank located in the main body or stored in another component that is itself not single-use (e.g. a refillable cartomizer).

The tank 205 surrounds, and thus defines a portion of, a passage 206 that extends between an inlet 207 and an outlet 208 at opposing ends of the consumable 203. In this respect, the passage comprises an upstream end at the end of the consumable 203 that engages with the main body 202, and a downstream end at an opposing end of the consumable 203 that comprises a mouthpiece 209 of the device 201. When the consumable 203 is engaged with the main body 202, a user can inhale (i.e. take a puff) via the mouthpiece 209 so as to draw air through the passage 206, and so as to form an airflow (indicated by arrows) in a direction from the inlet 207 to the outlet 208 of the passage 206. Although not illustrated, the passage 206 may be partially defined by a tube (e.g. a metal tube) extending through the consumable 203. The passage 206 is in fluid communication with a gap defined between the consumable 203 and the main body 202 (when engaged) such that air outside of the device 201 is drawn into the passage 206 (during an inhale).

The smoking substitute device 201 is configured to vaporise the e-liquid 204 for inhalation by a user. To provide this, the consumable 203 comprises a heater having of a porous wick 210 and a resistive heating element in the form of a heating filament 211 that is helically wound around a portion of the porous wick 210. The porous wick 210 extends across the passage 206 (i.e. transverse to a longitudinal axis of the passage 206) and opposing ends of the wick 210 extend into the tank 205 (so as to be submerged in the e-liquid 204). In this way, e-liquid 204 contained in the tank 205 is conveyed from the opposing ends of the porous wick 210 to a central portion of the porous wick 210 so as to be exposed to the airflow in the passage 206 (i.e. caused by a user inhaling).

The helical filament 211 is wound about this exposed central portion of the porous wick 210 and is electrically connected to an electrical interface in the form of electrical contacts 212 mounted at the end of the consumable that is proximate the main body 202 (when engaged). When the consumable 203 is engaged with the main body 202, the electrical contacts 212 contact corresponding electrical contacts (not shown) of the main body 202. The main body electrical contacts are electrically connected to a power source 222 of the main body 202, such that (in the engaged position) the filament 211 is electrically connected to the power source. In this way, power can be supplied by the main body 202 to the filament 211 in order to heat the filament 211. This heat is transferred from the filament 211 to the porous wick 210 which causes e-liquid 204 conveyed by the porous wick 210 to increase in temperature to a point at which it vaporises. The vaporised e-liquid becomes entrained in the airflow and, between the vaporisation point at the filament 211 and the outlet 208 of the passage 206, condenses to form an aerosol. This aerosol is then inhaled, via the mouthpiece 209, by a user of the device 201.

The power source of the main body 202 may be in the form of a battery 222 (i.e. the second battery; e.g. a rechargeable battery). Figure 1C shows an end face 216 of the main body 202. As is apparent from Figure 1C, the main body 202 includes one or more connectors 214a-c in the form of e.g. a USB or USB-C port for recharging the battery (e.g. 214a), and/or two contact pads (e.g. 214b and 214c). The connectors 214a-c are disposed on the end face 216 of the main body 202, which is at second end of the main body 202, opposite the first end comprising the engagement portion 217. The connectors 214a-c are arranged to engage a corresponding connection interface in a charging device to recharge the battery 222. It is to be understood that in one embodiment, only the connector 214a is present and, in another embodiment, only the connectors 214b and 214c are present.

The main body 202 may also comprise a controller that controls the supply of power from the power source to the main body electrical contacts (and thus to the filament 211). That is, the controller may be configured to control a voltage applied across the main body electrical contacts, and thus the voltage applied across the filament 211. In this way, the filament 211 may only be heated under certain conditions (e.g. during a puff and/or only when the system is in an active state). In this respect, the main body 202 may include a puff sensor (not shown) that is configured to detect a puff (i.e. inhalation). The puff sensor may be operatively connected to the controller so as to be able to provide a signal, to the controller, which is indicative of a puff state (i.e. puffing or not puffing). The puff sensor may, for example, be in the form of a pressure sensor or an acoustic sensor.

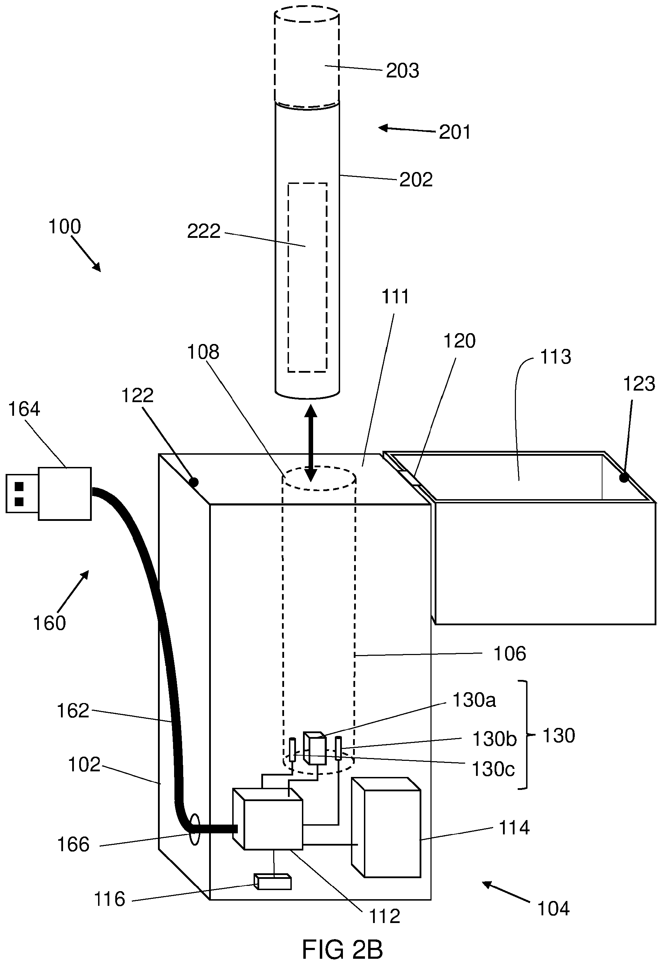

Figure 2A shows a charging device 104 (in a closed configuration) and Figure 2B shows a smoking substitute kit 100 including the charging device 104 (in an open configuration) and a smoking substitute device 201. To aid clear understanding of the following description, it will be assumed that the charging device 104 is used with the smoking substitute device 201 of Figures 1A to 1D. However, it is to be understood that in some other embodiments, the charging device 104 can be used with a different smoking substitute device.

In the embodiment of Figures 2A and 2B, the charging device 104 takes the form of a portable charge case. The charging device 104 acts as a case to hold a smoking substitute device 201 and protect it as it is carried around during use. Also, the case may serve to charge a rechargeable battery 222 (aka the "second battery") of the smoking substitute device 201, as well as a rechargeable battery (aka the "third battery") of a further external device.

The charging device 104 includes a housing 102 having a holder 106 in the form of a cavity or recess defined in the housing 102 for receiving the main body 202 of the smoking substitute device 201. In particular, a cross-sectional shape of the main body 202 may correspond to a shape of the holder 106, so that an interference fit may be formed when the main body 202 is inserted into the holder 106. A first connection interface 130 is disposed within the holder 106. The first connection interface 130 is arranged for electrical connection to the main body 202 of the smoking substitute device 201 when the main body 202 is received within the holder 106. In particular, the connectors 214a-c (Figure 1C) on the end face 216 of the main body 202 are arranged to engage the first connection interface 130 disposed in the holder 106 when the main body 202 is received in the holder 106. In this manner, when the main body 202 is received in the holder 106 of the charging device 104, the main body 202 may be connected to the charging device via the connectors 214a-c on its end face 216, so that the battery in the main body 202 may be recharged.

In the example shown, the first connection interface 130 includes connectors 130a-c. The connector 130a may for example be a male connector, such as a USB plug, which cooperates with a connector 214a (e.g. a female connector, such as a female USB socket) on the smoking substitute device 201. The connectors 130b and 130c may include connection pins, such as pogo pins, which cooperate with connection pads 214b and 214c on the smoking substitute device 201. In an alternative embodiment, the first connection interface 130 may include only the connector 130a, or only the pins 130b and 130c.

The holder 106 is in the form of a cavity having a generally tubular cross-section and so defines a generally tubular void. Specifically, the cavity includes a sidewall which terminates in an aperture 108 at one end (e.g. the top end, as shown in Figure 2B) and terminates in a base wall at the other end (e.g. the bottom end, as shown in Figure 2A). Since the cavity receives the smoking substitute device 201, a shape of the cross-section of the cavity accommodates a shape of the cross-section of the smoking substitute device 201. For example, the cavity of the charging device 104 and the main body 202 of the smoking substitute device 201 may both have a generally oval shaped cross-section, wherein the respective sizes of the two ovals are such that the main body 202 fits within the cavity. That is, the oval of the main body 202 may have the same shape but a slightly reduced area compared to the oval of the cavity. The oval shape may be truncated at each end along its maximum diameter. In an embodiment, the maximum and minimum widths of the oval shape of the main body 202 may be about 20mm and about 12mm, respectively, whereas the maximum and minimum widths of the oval shape of the cavity may be about 22mm and about 14mm, respectively.

Additionally, in an embodiment, the cavity has a depth which corresponds with a length of the main body 202 of the smoking substitute device 201. For instance, a depth of the cavity may be approximately equal to a length of the main body 202. For example, if the maximum length of the main body 202 is about 90mm, the cavity may have a maximum depth between 80mm and 100mm (e.g. main body length ±10mm), and preferably between 85mm and 95mm (e.g. main body length ±5mm), and more preferably between 87mm and 93mm (e.g. main body length ±3mm), and still more preferably between 89mm and 91mm (e.g. main body length ±1mm). Alternatively, the cavity may have a maximum depth of about 90mm (e.g. the main body length). In this way, when the smoking substitute device 201 is inserted into the cavity, the engagement portion 217 end of the main body 202 may be substantially flush with the cavity aperture 306. As such, the consumable 203 may be inserted into the main body 202 when the main body 202 is received within the cavity such that part of the consumable 203 is substantially proud of the charging device 104. The consumable 203 may have a total length of about 45mm but, when inserted into the main body 202, the consumable 203 may only protrude about 20mm beyond the main body 102. As such, when the smoking substitute device 201 is inserted into the holder 106, the consumable 203 may protrude about 20mm beyond the charging device 104. In this way, the smoking substitute device 201 may be used to generate vapour whilst engaged with the charging device 104. Alternatively, a depth of the cavity may be slightly less than a length of the main body 202 such that a portion of the main body 202 protrudes from and above the aperture 108 when it is connected in the cavity for charging. For example, the amount of protrusion may be between 9mm and 2mm, and preferably between 7mm and 3mm, and more preferably between 5mm and 4mm. Alternatively, the amount of protrusion may be about 3mm. In this way, a user is able to grab hold of the protruding portion of the main body 202 in order to remove it from the cavity. This may be particularly advantageous if no consumable 203 is connected to the main body 202.

The first connection interface 130 is positioned in a base portion of the holder 106, for example, on or proximal to the base wall. Specifically, the first connection interface 130 may be fixed to the base wall and may protrude at least partially into the cavity void. The connector 130a may be one part of a USB connection, for example, a USB-C plug or a micro USB plug. That is, the connection interface 130a may be one part of a two-part symmetrical connection (i.e. USB-C) or be one part of a two-part asymmetrical connection (i.e. micro-USB, Type-A, Type-B or Type-AB USB connectors). Additionally, the connection pins 130b and 130c, which are configured to contact corresponding contact pads (e.g. 214b and 214c) may also constitute either a two-part asymmetric or a two-part symmetric connection (i.e. a first part includes the two pins and the second part includes the two pads).

It is to be understood that a two-part *asymmetric* electrical connection is considered to be a two-part electrical connection between first and second asymmetric electrical connectors. These first and second connectors are asymmetric in the sense that they can only be mechanically and electrically connected together (i.e. engaged) in only one way or orientation. For example, a specific part (e.g. a top) of the first connector must be aligned with a specific part (e.g. a top) of the second connector before the two connectors can be engaged together to form a mechanical and electrical connection. That is, the two connectors cannot be engaged together to form the mechanical and electrical connection if these two specific parts are not aligned.

On the other hand, a two-part *symmetric* electrical connector is considered to be a two-part electrical connection between first and second connectors that can be mechanically and electrically connected together (i.e. engaged) in either or any way or orientation. For example, a top or bottom of the first connector may be aligned with either a top or bottom of the second connector for the two connectors can be engaged together to form a mechanical and electrical connection.

The charging device 104 further includes a second connection interface 160 disposed on a side of the housing 102, and which is arranged for connection to an external device to charge the external device (i.e. to charge a battery in the external device). The second connection interface 160 comprises a cable 162 and an electrical connector 164 disposed at an end of the cable 162. The cable 162 is electrically connected to control circuitry 112 inside the housing 102, and exits the housing via an aperture 166 formed in the side of the housing 102. In the example showed, the connector 164 is a male USB connector, so it may be connected to an external device having a corresponding female USB connector. However, in other examples, different types of connector may be used. The external device may be any suitable electronic device having a rechargeable battery, and which is connectable to the second connection interface 160. In one example, the external device may be a further smoking substitute device (i.e. in addition to the smoking substitute device 201 which is receivable in the holder 106). Then, the charging device 104 may be used to charge two smoking substitute devices simultaneously. In another example, the external device may be a smartphone, portable music player, or other personal electronic device.

The charging device 104 includes a first battery 114 which is disposed within the housing 102. The first battery 114 is a rechargeable battery, and is operable to charge a smoking substitute device that is connected to the first connection interface 130, and/or an external device that is connected to the second connection interface 160. The charging device 104 further includes a third connection interface 116 in the form of a connection port which is disposed on an outer surface of the housing 102. For example, the connection port 116 may be a USB connector, such as, a female USB socket. The connection port may serve to connect the charging device 104 to an external power source (not shown), e.g. by connecting a cable (not shown) between the connection port and the external power source. The cable may be removably connectable to the connection port. Accordingly, a first end of the cable may terminate in a cooperating connector, such as, a male USB plug. Further, a second end of the cable may terminate in a connector for connecting the cable to an external power source, e.g. to a computer or mains supply. That is, the second end may also terminate in a USB connector, such as, a male USB plug. Although in the present example the cable is presented as having a USB connector, other types of connectors may also be used, depending upon the type of power source used. In this manner, the cable may be removably plugged into an external power source and the charging device 104 to provide power to the control circuitry 112 which can be used to charge the first battery 114, for example, when a charge of first battery 114 has been depleted from charging the smoking substitute device 201 and/or external device.

The control circuitry 112 is electrically coupled to the first battery 114, the first connection interface 130, the second connection interface 160 and the third connection interface 116, and is configured to control a power supply to and from the various components of the charging device 102. The control circuitry 112 is configured to control charging of the first battery 114 by the external power source when the third connection interface 116 is connected to the external power source. Thus, when the third connection interface 116 is connected to the external power source, the control circuitry 112 may route power to the first battery 114 in order to charge the first battery 114. The control circuitry 112 is further configured to control charging of the smoking substitute device 201 when the smoking substitute device is connected to the first connection interface 130, and charging of the external device when the external device is connected to the second connection interface 160 (i.e. when the external device is connected to connector 164). Thus, the control circuitry 112 may control an amount of power supplied to the first connection interface 130 and the second connection interface 160. In particular, the control circuitry 112 may control an amount of power supplied from the first battery 114 to the first connection interface 130 and the second connection interface 160.

The control circuitry 112 may be configured to detect whether the smoking substitute device is connected to the first connection interface 130, and whether the external device is connected to the second connection interface 160. In this manner, the control circuitry may determine whether to supply power to the first connection interface 130 and/or second connection interface 160.

The control circuitry 112 may include one or more power switches (e.g. MOSFETs) to control power supplied to the various components. Together, the control circuitry, first battery 114, first charging interface 130, second charging interface 160 and third charging interface 116 may be referred to as a charging assembly of the charging device 104. The control circuitry 112 may also include electrical components which are arranged to convert a voltage and/or current provided by the external power source to a desired level, to ensure that a desired power level may be delivered to the first battery 114.

In some embodiments, the control circuitry 112 may be configured to enable pass-through charging, such that when the third connection interface 116 is connected to the external power source, the first battery 114 may be charged simultaneously with a first smoking substitute device connected to the first connection interface 130 and an external device connected to the second connection interface 160. Moreover, when the third connection interface 116 is connected to the external power source, the control circuitry 112 may be configured to control whether power from the first battery 114 and/or power from the external power source is supplied to the first connection interface 130 and/or the second connection interface 160. Such control may be performed based on a charge state of the first battery 114. For example, where a charge state of the first battery 114 is low, a combination of power from the first battery 114 and the external power source may be supplied to the first connection interface 130 and/or second connection interface 160, in order to ensure that sufficient power is supplied to charge the smoking substitute device and/or external device.

The charging device 104 may also include a charge indicator (not shown) in the form of an indicator light on an outer surface of the housing 102. The indicator light serves to indicate a charging status of the smoking substitute device when it is plugged into the charging device 104, i.e. whether the smoking substitute device is charging, whether it is charged. Also, the indicator light may indicate an amount of charge in the smoking substitute device (e.g. <20%, 21%-50%, 51%-99% and 100%). The indicator light may be arranged to indicate the charging status and charge amount in various manners, e.g. via a colour of the indicator light and/or via a blinking pattern of the indicator light. The indicator light (or a second indicator light) may/can provide an indication of a charging status and/or charge amount of the charging device, in a similar manner. For example, a first indicator light may indicate the charge status and/or charge amount of the smoking substitute device and be positioned near the aperture 108, whereas a second indicator light may indicate the charge status and/or charge amount of the charging device and be positioned near the connection port 116.

The charging device 104 comprises a cover 110 which is moveably attached to the housing 102. The cover 110 is movable between a closed configuration (shown in Figure 2A) and an open configuration (shown in Figure 2B). In the closed configuration the cover 110 covers the aperture 108 of the holder 106. The cover 110 forms an enclosure, or an enclosed space. The enclosure can contain the smoking substitute device 201 (e.g. the main body 202 with or without the consumable 203). As such, the enclosure may cover all sides of the smoking substitute device 201 in the closed configuration. The enclosure surrounds the smoking substitute device 201 such that the smoking substitute device 201 (and particularly its mouthpiece) is prevented from becoming dirty or from attracting dirt, i.e. to improve hygiene. Also, the enclosure prevents the smoking substitute device 201 from damage. In the open configuration the cover 110 is spaced from the aperture 108 to permit insertion/removal of the smoking substitute device 201 into/out of the holder 106.

In the open configuration, a top surface 111 (Figure 2B) of the housing 102 is exposed to reveal the aperture 108. The cover 110 defines a cavity 113 which can receive part of a smoking substitute device 201 (e.g. a top portion of the main body 202 and/or a top portion of the consumable 203) when the cover 110 is in the closed configuration and the smoking substitute device is received in the holder 106. As seen in Figure 2B, the cover 110 is attached to the housing 102 by a hinge 120. The hinge 120 is positioned at a seam between the housing 102 and the cover 110. Other positions along the side face are possible. The cover 110 is pivotable about the hinge 120 (in the direction shown by arrow 140) between the closed configuration and the open configuration.

The charging device 104 is provided with at least one magnetic coupling between the housing 102 and the cover 110. The magnetic coupling is shown in Figure 2B. The magnetic coupling is operable to hold the cover 110 in the closed configuration. The magnetic coupling includes a first magnet 122 disposed on the housing 102 and a second magnet 123 disposed on the cover 110. The first magnet 122 and second magnet 123 are arranged to attract, e.g. the first magnet 122 has a north pole oriented outwardly and the second magnet 123 has a south pole oriented outwardly (or vice versa) such that, when the first magnet and the second magnet are brought together, they attract one another. The magnetic coupling 122, 123 may be positioned at an opposite side of the housing 102 to the hinge 120. Additionally or alternatively, the charging device 104 may be provided with at least one mechanical coupling between the housing 102 and the cover 110. In a similar way to the magnetic coupling 122, 123, the mechanical coupling is operable to hold the cover 110 in the closed configuration. The mechanical coupling may be positioned at an opposite side of the housing 102 to the hinge 120.

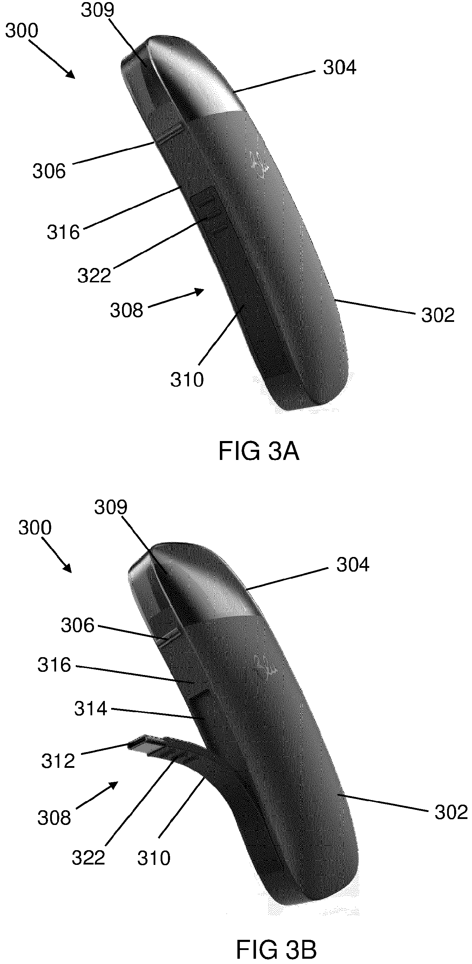

A charging device 300 according to an embodiment of the invention is illustrated in Figures 3A-3D. The charging device 300 is based on the same principles as discussed above in relation to charging device 104, and features discussed above in relation to charging device 104 may be shared with charging device 300. The charging device includes a housing 302, in which a first battery and charging circuitry are contained. Additionally, a holder for receiving a smoking substitute device is defined within the housing. Although not shown in Figures 3A-3D, the holder of charging device 300 is similar to the holder 106 described above. A first connection interface is disposed within the holder of charging device 300, and arranged for connection to a smoking substitute device when the smoking substitute device is received in the holder. For example, the first connection interface of charging device 300 may be similar to the first charging interface 130 described above. In this manner, when the smoking substitute device is received within the holder, the smoking substitute device may be charged by the first battery in the charging device 300.

A cover 304 is movably attached to the housing 302 via a hinge 306. In the configurations illustrated in Figures 3A-3D, the cover is in a closed position. However, similarly to cover 110 described above, the cover 304 is movable between the closed position where the cover 304 forms an enclosure around the holder, and an open position where the smoking substitute device may be inserted into, or removed from, the holder. The cover 304 is made of a semi-transparent material. In the example shown in Figures 3A-3D, a smoking substitute device 309 is received within the holder in the housing 302, such that the smoking substitute device 309 may be charged by the first battery of the charging device 300. A mouthpiece of the smoking substitute device 309 is visible through the semi-transparent cover 304. Together, the charging device 300 and smoking substitute device 309 may form a smoking substitute kit according to an embodiment of the invention.

The charging device 300 includes a second connection interface 308, which is disposed on a side of the housing 302. The second connection interface 308 is for connection to an external device, so that the external device may be charged by the first battery in the charging device 300. The second connection interface 308 includes a cable 310 and a connector 312 disposed at a first end of the cable 310. The connector 312 is visible, for example, in Figure 3B. In the example shown, the connector 312 is a male USB-C connector, so the second connection interface 308 may be used to charge an external device having a female USB-C connector. However, in other examples, different types of connectors may be used.

The charging device 300 further includes a third connection interface (not shown), for connecting the charging device to an external power source, so that the first battery in the charging device 300 may be charged by the external power source. The control circuitry in the charging device 300 may function in a similar manner to the control circuitry 112 discussed above, in order to control power supply to the various components of the charging device 300. In particular, the control circuitry may control supply of power to the first connection interface and to the second connection interface 308 from the first battery and/or the external power source. The control circuitry may also control charging of the first battery by the external power source.

A second end of the cable 310, opposite the first end of the cable 310 that comprises the connector 312, is mechanically secured to the housing 302. The cable 310 is electrically connected to the control circuitry in the housing 302, e.g. via an aperture in the housing 302. In some cases, the second end of the cable may pass through the aperture in the housing 302, such that a portion of the cable 310 is disposed inside the housing 302. Then, the aperture may be dimensioned to exert a retaining force on the cable 310 in order to mechanically secure the cable 310 to the housing 302. Thus, the first end of the cable 310 including the connector 312 can be moved relative to the housing 302, whilst the second end of the cable 310 remains anchored to the housing 302.

A recess 314 is formed in the side of the housing 302. The recess 314 is arranged to receive the second connection interface 308, i.e. the cable 310 and the connector 312. In this manner, the cable 310 and connector 312 can be stored in the recess 314 when the second connection interface 308 is not in use (e.g. when no external device is connected to the second connection interface 308). The recess 314 is formed in an external surface of the housing 302. Additionally, the housing 302 includes a cover portion 316 which is arranged to cover a portion of the recess 314. Together, the cover portion 316 and the recess define a pocket in which the connector 312 can be received. In this manner, when the connector 312 is received in the recess, it may be covered by the cover portion 316, such that it may be partially enclosed by the housing 302 and thereby protected.

The second connection interface 308 is movable between a stowed position where the cable 310 and the connector 312 are received in the recess 314, and a deployed position where the connector 312 and at least part of the cable 310 are disposed outside the recess 314. Figure 3A shows a configuration of the charging device 300 where the second connection interface 308 is in the stowed position. Figure 3B shows a configuration of the charging device 300 where the second connection interface 308 is in the deployed position. Thus, when the second connection interface 308 is not in use, it may be placed in the stowed position. In the stowed position, the connector 312 is disposed in the pocket formed by the recess 314 and the cover portion 316, such that it is protected, whilst the cable 310 is disposed within the recess 314. This may prevent the cable 310 from becoming caught or tangled when not in use. On the other hand, when the user wishes to use the second connection interface 308, e.g. to charge an external device, the second connection interface 308 may be moved to the deployed position. In the deployed position, the connector 312 is disposed outside the recess 314 and so can be connected to an external device.

The cable 310 is shaped to have two opposing flat surfaces, and such that a cross-sectional shape of the cable 310 substantially matches a cross-sectional shape of the connector 312. Moreover, a width and thickness of the second connection interface 308 (i.e. of the cable 310 and the connector 312) are substantially uniform along a length of the second connection interface 308. A shape of the recess 314 is complementary to a shape of the second connection interface 308. In this manner, when the second connection interface 308 is in the stowed position, the second connection interface may be suitably accommodated within the recess 314. In the example shown, the recess 314 is in the form of an elongate groove formed in an external surface of the housing 302. A depth of the recess 314 may correspond to a thickness of the second connection interface 308 (e.g. a thickness of the cable 310 and/or of the connector 312), whilst a width of the recess 314 may correspond to a width of the second connection interface (e.g. a width of the cable 310 and/or of the connector 312). In this manner, the cable 310 may lie flat in the recess 314, such that one of its flat surfaces may lie against a surface of the housing 302 in the recess 314, whilst the other one of its flat surfaces may be like flush with the outer surface of the housing 302. As a result, the exposed flat surface of the cable 310 may feel to a user like a continuation of the outer surface of the housing 302.

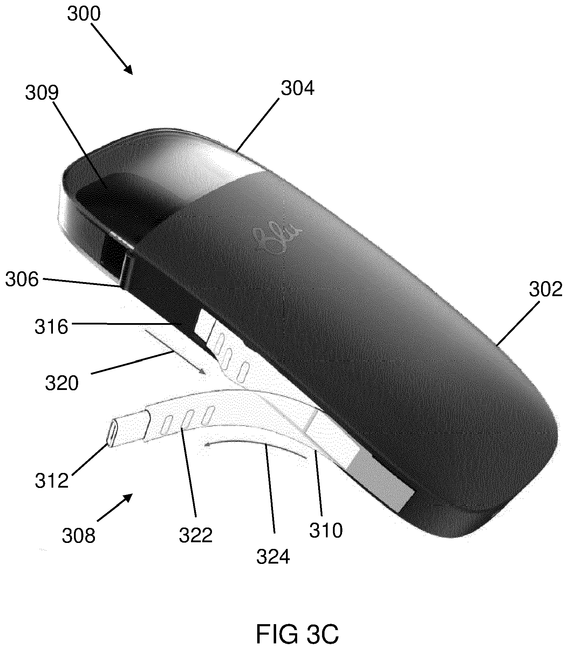

Figure 3C illustrates a process for moving the second connection interface 308 from the stowed position to the deployed position. For illustration purposes, Figure 3C illustrates the second connection interface 308 at two different steps in the process. Starting in the stowed position (Figure 3A), the connector 312 is covered by the cover portion 316 of the housing 302, and the cable 310 is disposed within the recess 314. In a first step, the connector 312 may be slid out from under the cover portion 316 by sliding the connector 312 along the recess 314 towards the second end of the cable 310, as illustrated by arrow 320. Gripping elements in the form of protrusions 322 on the surface of the cable 310 may facilitate applying a force to the cable 310 along the direction illustrated by arrow 320, in order to slide the connector 312 along the recess 314. Sliding the connector 312 in this direction causes the cable to bow out of the recess 314, so that it can be gripped more easily. Then, in a second step, the cable 310 can be pulled out of the recess 314 (e.g. by gripping a portion of the cable 310 that has bowed outwards), in order to remove both the cable 310 and the connector 312 from the recess 314, as illustrated by arrow 324. Following this second step, the second connection interface 308 is in the deployed position, such that an external device can be connected to connector 312 in order to charge the external device. To return the second connection interface 308 to the stowed position, the cable 310 may be bent in order to insert the connector into the recess 314 under the cover portion 316.

The cable 310 is flexible, such that it can easily be bent when the second connection interface 308 is moved between the stowed and deployed positions. Additionally, the cable 310 may include a resilient (e.g. elastic) material which is arranged to bias (or urge) the second connection interface 308 towards the stowed position. For example, an outer jacket of the cable 310 may be made of or include a resilient material such as rubber or silicone. As a result, sliding the connector 312 along the recess as illustrated by arrow 320 may cause the outer jacket of the cable 310 to exert a restoring force which urges the connector 312 back towards the cover portion 316. Similarly, when the cable 310 is bent to move the connector 312 away from the housing 302, the outer jacket of the cable 310 may exert a restoring force which urges the connector 312 back towards the housing 302. In this manner, the second connection interface 308 may be automatically moved towards the stowed position, due to a restoring force exerted by the cable 310.

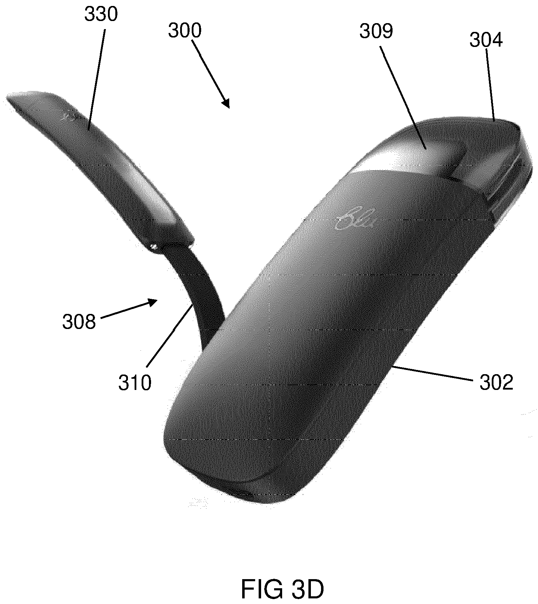

Figure 3D illustrates a configuration of the charging device 300 where the second connection interface 308 is in the deployed position, and where a smoking substitute device 330 is connected to the second connection interface 308. In particular, the connector 312 is connected to a corresponding connector on the smoking substitute device 330. So, in the example of Figure 3D, the external device is a smoking substitute device. However, in other examples, other types of electronic devices may be connected to the second connection interface 308. The smoking substitute device 330 may, for example, be similar to smoking substitute device 201 described above.

In the configuration of Figure 3D, the smoking substitute device 330 may be charged by the first battery of the charging device 300. Thus, both the smoking substitute device 309 which is received in the holder in the housing 302, and the smoking substitute device 330 which is connected to the second connection interface 308 may be charged by the first battery of the charging device 300

In the above-described embodiments, the charging devices 104 and 300 are shown as being substantially rectangular. However, it is to be understood that in some other embodiments, the shape of the charging device may vary provided that it can still contain the above-described components and perform the above-described functions. For example, the charging case may have a substantially oval or truncated-oval cross-section.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the words "have", "comprise", and "include", and variations such as "having", "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means, for example, +/- 10%.

The words "preferred" and "preferably" are used herein refer to embodiments of the invention that may provide certain benefits under some circumstances. It is to be appreciated, however, that other embodiments may also be preferred under the same or different circumstances. The recitation of one or more preferred embodiments therefore does not mean or imply that other embodiments are not useful, and is not intended to exclude other embodiments from the scope of the disclosure, or from the scope of the claims.

## Claims

1. A charging device for charging a smoking substitute device, the charging device comprising:
a housing having a holder for receiving a smoking substitute device;
a charging assembly comprising a first connection interface arranged for connection to the smoking substitute device when the smoking substitute device is received in the holder, and a second connection interface arranged for connection to an external device;
wherein the charging assembly is configured to charge the smoking substitute device when the smoking substitute device is connected to the first connection interface, and to charge the external device when the external device is connected to the second connection interface.

2. A charging device according to claim 1, wherein the second connection interface is disposed on a side of the housing.

3. A charging device according to claim 1 or 2, wherein the second connection interface includes a cable and a connector disposed at an end of the cable.

4. A charging device according to claims 2 and 3, wherein the side of the housing includes a recess for receiving the connector.

5. A charging device according to claim 4, wherein the housing includes a cover portion arranged to cover the connector when the connector is received in the recess.

6. A charging device according to claim 4 or 5, wherein the recess is further arranged to receive the cable.

7. A charging device according to one of claims 4 to 6, wherein the second connection interface is movable between a stowed position where the connector is received in the recess, and a deployed position where the connector is disposed outside of the recess.

8. A charging device according to claim 7, wherein the second connection interface is biased towards the stowed position.

9. A charging device according to claim 8, wherein the cable includes a resilient material arranged to bias the second connection interface towards the stowed position.

10. A charging device according to one of claims 3 to 9, wherein a gripping element is disposed on a surface of the cable.

11. A charging device according to one of claims 3 to 10, wherein the cable includes opposing flat surfaces.

12. A charging device according to one of claims 3 to 11, wherein a cross-sectional shape of the cable substantially matches a cross-sectional shape of the connector.

13. A charging device according to one of claims 3 to 12, wherein the connector is a USB connector.

14. A charging device according to any preceding claim wherein, when the smoking substitute device is connected to the first connection interface and the external device is connected to the second connection interface, the charging assembly is configured to simultaneously charge the smoking substitute device and the external device.

15. A smoking substitute kit comprising:
a smoking substitute device; and
a charging device according to any preceding claim.
